# EUROPEAN PATENT SPECIFICATION

(11) **EP 2 350 541 B1**
(45) Date of publication and mention of the grant of the patent: **08.06.2016**
(21) Application number: 09799397.6
(22) Date of filing: 10.11.2009
(51) Int. Cl.: F25B 39/02, F28F 1/08, F28F 19/04

(54) **REFRIGERATION CIRCUIT**
KÜHLKREISLAUF
CIRCUIT DE RÉFRIGÉRATION

(30) Priority: 17.11.2008 IT MI20082039
(43) Date of publication of application: 03.08.2011
(73) Proprietor: INDUSTRIE ILPEA S.p.A., 21023 Malgesso (Varese) (IT)
(72) Inventor: CATALDO, Claudio, Damiano, I-21023 Malgesso (Varese) (IT); CITTADINI, Paolo, I-21023 Malgesso (Varese) (IT)
(74) Representative: Tarabbia, Luigi
(86) International application number: PCT/IB2009/054989
(87) International publication number: WO 2010/055468

(56) References cited:
- DE-A1- 2 208 746
- FR-A1- 2 697 077
- JP-A- 6 011 294
- JP-A- 11 023 188
- JP-A- 2000 356 368
- JP-A- 2005 147 588
- US-A- 2 819 731
- US-A- 3 616 849
- Althouse D, et al.: "Modern Refrigeration and Air Conditioning" 2000, The Goodheart-Willcox Company, Inc. , Tinley Park,Illinois , XP002552193 , pages 382-383 the whole document

## Description

The present invention relates to a refrigeration circuit. More particularly, the present invention relates to a refrigerating apparatus, preferably of the type used in household appliances such as refrigerators, freezers, deep-freezers, iceboxes and the like. The invention is likewise and also applicable, in a totally similar manner, to household appliances for conditioning.

It is known that refrigerators of the traditional type and similar refrigerating apparatus, comprise a refrigeration circuit wherein a refrigerating means is used which is suitable for subtracting heat from a closed space to be cooled to a predetermined temperature, such as the interior of the refrigerator or freezer, transferring it towards the outer warmer space. The above refrigeration circuit is a closed circuit wherein a compressor, a condenser, a lamination or capillary device and an evaporator operate in a sequence according to known operating modes. In particular, the refrigerating means is a low boiling point substance suitable for undergoing a passage of state from liquid to vapour by expansion with the effect of subtracting heat to the ambience it is in contact with, and afterwards a reverse passage from vapour to liquid, during the circulation thereof within the refrigeration circuit. Focusing on the thermal exchanges of the refrigerating means with the air of the closed space to be refrigerated and of the outer environment, such exchange takes place by means of metal coils wherein the refrigerating means is conveyed so as to increase the thermal exchange surface between the refrigerating means and the air itself.

The metal coils used for such function are generally obtained starting from a continuous metal tube (of steel, aluminium or copper) which is suitably bent multiple times for following a profile of a useful surface intended for thermal exchange. Such useful surface is located at the back of the refrigerator in the case of the condenser, whereas in the case of the evaporator, the arrangement of the coils depends on the model of refrigerating apparatus or refrigerator, freezer or combined, and it concerns one or more walls inside the refrigerator itself. In particular, it is known to position the coil of the evaporator at the inside bottom wall and/or at the inside side walls of the refrigerator, or even at one or more shelves provided inside the refrigerator. According to the arrangement inside the refrigerators and to the results to be achieved, the evaporators may be static (Wire On Tubes or Tubes On Plates) or dynamic (No Frost). In any case there is a pack consisting of steel or aluminium or copper tubes suitably bent and welded or otherwise connected to other metal bodies that increase the exchange surface thereof (metal wires in the case of WOT, metal sheets in the case of TOP and aluminium sheets in the case of NF).

The bending of the metal tube for making the evaporator coil is carried out according to different methods depending on the geometry of the surface whereon the coil itself is intended to be active. In fact, the bending of the metal tube is generally carried out by special tube bending machines prior to the final installation of the coil, and it must therefore be arranged in a differentiated manner according to the final geometry of the coil. The bending must be made so as to prevent choking or section variations in such zones.

Disadvantageously, this implies poor operating flexibility, related to the impossibility of providing for a standard process for obtaining the coil that will remain unchanged only for the refrigerators of the same model or same range. Such disadvantage causes the drawback of implying different production processes that strongly negatively affect the manufacturing times and as a direct consequence, imply high production costs.

Moreover, the storage processes are damaged as they must provide for the storage of different types of coils, each intended to be mounted only on predetermined thermal exchange surfaces having predetermined geometry.

Moreover, the manufacture of the above coils starting from metal tubes implies further production costs related to the procurement of raw materials (metal), to any processing of raw materials themselves, as well as to the complex operations for manufacturing the metal tube and the bending thereof for defining the end profile of the coil. In fact, the metal tube is obtained by welding a suitable formed flat sheet, and such process is very expensive and complex, as it must also be carried out in an accurate manner to prevent leaks of cooling fluid which would irreparably damage the refrigerator in very short times, with serious economic consequences for the manufacturer and for the environment (such fluids are often polluting). Moreover, the metal tube is supplied in rolls to the manufacturers of evaporators and is thus unrolled, straightened, the diameter thereof is checked and then it is suitably bent multiple times at 180° in alternating direction to obtain the desired thermal exchange surface, and finally coupled to metal bodies shaped as fins or straight metal wires, suitable for facilitating the thermal exchange with the ambience to be cooled. The coupling with such metal wires is mostly made by spot welding (WOT) or by the introduction of the tube bundle into special slits obtained in the aluminium fins (NF). These are mainly manual operations that can be automated only to the disadvantage of the flexibility of the production line and moreover the need of making welding spots in the WOT and that of welding the inlet and outlet tubes of the evaporator to the remaining parts of the circuit, forces to chemically treating and then coating or galvanically treating all the surface of the part, so as to make it corrosion resistant. The complexity of the production process of the metal coils of known type and described above is clear. Moreover, the presence of the metal coil and of the metal bodies greatly increases the overall mass and as a consequence, the weight of the household appliance.

Also the above further chemical treatments are expensive and very polluting (we may consider for example, nickel-plating): since after such treatments, sludge containing heavy metals is generated which must be disposed of to special collection centres for highly toxic waste.

A refrigerator is known from patent EP1479987, comprising an evaporator equipped with a flexible tube. The flexible tube, made of plastic material, is cylindrical and wound spiral-wise around respective supports and can be elongated or packed for varying its configuration based on a part of the refrigerator wherein a cooling action is desired.

The flexibility of the tube, however, is limited and the same may be deformed substantially along a single direction around which the coils are wound.

Moreover, a refrigerator is known from patent KR 20010094016 provided with an evaporator made of plastic material. The Hand book "Modern Refrigeration and Air Conditioning" by Althouse et al. discloses a refrigeration circuit according to claim 1 (pages 382-383).

To prevent the known problems of frosting, such evaporator (with rigid structure and shaped as a flat surface defining the cooling tubes and the fins) exhibits a coating of electrically conductive paste to be connected to an external metal conductor and a further external insulating layer of plastic as well. With reference to the European intellectual property mentioned above, disadvantageously, the adoption of a similar plastic tube having perfectly cylindrical shape, does not allow optimum thermal exchange by the cooling fluid circulating therein. Moreover, the above cylindrical tube wound spiral-wise is suitable for being elongated or packed along a predetermined direction, however it does not exhibit high properties of flexibility in any direction, and in particular in the case of very marked bending such as narrow radius bending generally required in making flat coils for refrigerators.

In detail, such intellectual property does not ensure high performance as regards the operating flexibility and adaptability of the heat exchanger geometry as is currently required on the market.

Also the Korean document makes no mention of the problems of adaptability and modularity of the heat exchanger.

The above patent also refers to the making of a layer of conductive material comprised between an internal plastic material in contact with the cooling fluid and an external coating material the nature and application technology whereof are absolutely not described.

In the above patents in any case one of the most important problems was not solved: how to prevent gas leaks through the evaporator or condenser surfaces or through the connecting devices of such apparatus with the other components of the refrigerating circuit. The perfect seal to any gas leaks through the refrigeration circuit is a necessary condition for a refrigerator to work properly and for several years.

The making of a flexible tube is also known from patent EP 918182 for conveying a coolant in an air conditioning system.

The structure described by such intellectual property in any case appears very complex as it envisages a first inner layer and an outer layer of plastic material coupled by the adoption of an intermediate layer.

A cover is provided outside the tubes of plastic material, consisting of synthetic fibres in turn protected by a further outer sheath.

Such a complex structure makes the tubing described in the European intellectual property substantially unsuitable for use within heat exchangers that must attain the passage of the heat itself between the cooling fluid and the external ambience.

On the other hand, the tube described in the above European patent exclusively serves for carrying such fluid and not for a thermal exchange with the ambience, which takes place in different and not described structures.

Hereinafter it is also noted that tubing of plastic material for heat exchangers is known for applications totally different from refrigeration circuits for household appliances.

In particular, such heat exchangers are designed for the most varied applications in the automotive field. For example, exchangers are known according to patent US2007/0289725 and US5706864.

However, it should be noted that the devices according to one or the other of the indicated patents cannot be used in refrigeration circuits according to the present invention since their field of application makes them totally unsuitable for carrying the refrigerating gases commonly used in household appliances and also they are not suitable for allowing thermal exchange in conditions of liquid phase and gaseous phase of the fluid circulating therein. These applications typically use only a fluid that must work at operating temperatures and pressures totally different from those normally used in a refrigerating circuit for household appliances.

In this respect, using the one or the other of the devices described in the two patents mentioned above is inconceivable since the man skilled in the art would immediately recognise a plurality of difficulties of adaptation related to the leaks of refrigerating material, to the insufficient thermal exchange, to the impossibility of a correct velocity of the fluid inside the tubing, etc.

The technical task of the present invention is to provide a refrigeration circuit and household appliance which should be free from the drawbacks mentioned above.

Within such technical task, an object of the invention is to provide a household appliance for cooling whose production should imply a high operating flexibility.

A further object of the invention is to provide a household appliance for cooling which should be made in a simple, inexpensive and more environment-friendly way.

A further object of the invention is to provide a household appliance for cooling which should be made in a more automated and thus reliable manner, with special reference to the above welding operations, eliminating manual welding that is presently carried out for connecting the various circuit devices to one another. A further object of the invention is to combine, where possible, the materials used to make the various cooling system parts (presently copper, aluminium and steel), replacing them with plastic materials compatible and recyclable without separation, so as to simplify the storage processes of the parts themselves. It is also an object of the invention to provide a household appliance for cooling which should have smaller mass and weight.

It further is an object of the invention to provide a household appliance for cooling which should exhibit high flexibility in a plurality of directions, and in particular in the case of small bending radiuses.

These and yet other objects, as will appear hereinafter in the present description, are substantially achieved by a refrigeration circuit for a Household appliance for cooling having the features respectively expressed in claim 1 and by a process for producing a subing for a refrigeration circuit according to claim 10.

The invention results from the observation that the slow phase of the thermal exchange process on the current refrigerating circuits is not heat conduction through the thickness of the exchanger tube, but thermal exchange by natural or forced convection (no frost) between the air and the surface of the tube itself.

So far, the exchangers for household appliances have always been made of metal material (even very expensive like copper), to increase the thermal conductivity of the tube. The invention, on the contrary, uses a plastic material, less expensive, better processable, but with lower thermal conductivity, just because the exchange process is not generated by the thermal conductivity of the tube.

This applies to thickness of the plastic tube not larger than 1.5 mm; in order to improve the thermal exchange of the circuit it has been thought to intervene in the slow phase of the process (thermal exchange between tube and air), increasing the exchange surface with the use of corrugated tube surfaces that with the same diameter allow 30-50% increase of the exchange surface per unit of length of the tube.

A preferred but non-exclusive embodiment of a household appliance for cooling shall now be illustrated by way of a non-limiting example according to the present invention and to the annexed figures, wherein:
- figure 1 shows a schematic representation of a refrigeration circuit according to the present invention, and in particular of the type with evaporating tubes;
- figure 2 shows a perspective view of a portion of the refrigeration circuit of a household appliance according to the present invention;
- figure 3 shows a partly side and partly sectional representation of a tube usable in a refrigeration circuit according to the present invention and according to a first embodiment;
- figure 3a shows a possible version of section of the tube of figure 3;
- figure 4 shows a partly side and partly sectional representation of the detail of figure 3 consisting of a double layer of plastic material suitable for making the tube wall totally gas-proof according to a different embodiment;
- figures 5 and 6 show two possible sections of a capillary tube used in the circuit according to the invention;
- figures 7 to 10a show a section of possible embodiments of the heating means used in the tubing according to the invention;
- figures 11-13 show different embodiments of connectors for connecting portions of tubing used in the circuit according to the invention;
- figures 14 and 15 show the coupling between a capillary tube and tubing according to the present invention;
- figures 14a, 14b and 14c show three possible embodiment versions of a coupling between capillary and corrugated tube obtained by coextrusion or, at all events, coupled in a continuous manner in order to optimise thermal exchange and energy recovery;
- figure 16 shows the coupling between metal tubing and a plastic tubing according to the present invention;
- figures 17-19 show the coupling between two end portions of tubes of plastic material used in the circuit according to the present invention;
- figure 20 shows a possible configuration of coupling between a corrugated tubing and the compressor or other smooth or corrugated tubing; and
- figures 21a and 21b show two possible configurations of engagement between tubing and capillary;
- figure 22 is a representation partly in side view and partly in section of a tube usable in a refrigeration circuit in accordance with the present invention, in a further embodiment allowing easier coupling between a corrugated plastic tube and a metal layer joined thereto;
- figure 23 shows an enlarged detail of the wall section of the tube referred to in Fig. 22; and
- figure 24 is a perspective view of the tubing in figures 22 and 23;
- figure 25 shows an alternative embodiment of the tube of figure 22, seen in section;
- figure 26 shows a corrugation form of the alternative tube relative to the preceding figures with flat inner surfaces of the recesses, so as to reduce the noise produced by the gas flowing within the tube, to a minimum; and
- figure 27 is a section view of a further alternative embodiment of the tube seen in figure 22.

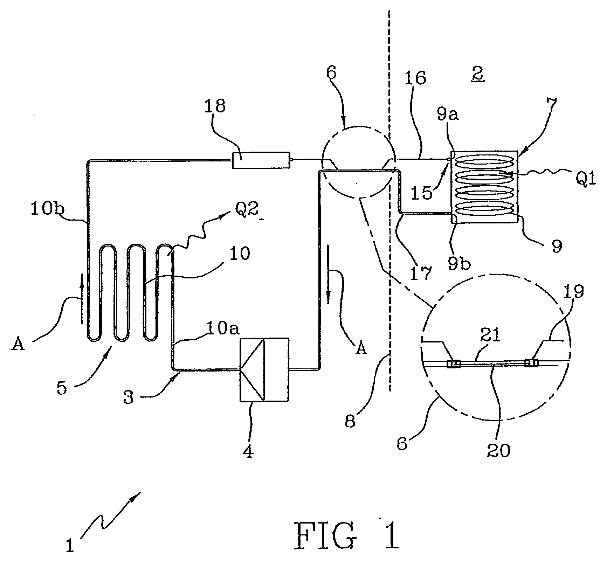

According to the schematic view of figure 1, reference numeral 1 globally indicates a refrigeration apparatus which may be, by way of an example, a refrigerator, a freezer, a deep-freezer, a conditioner or any other appliance mainly for household purpose suitable for cooling a closed environment, in particular a space 2, particularly for storing food products or for conditioning a living room.

Apparatus 1 comprises a refrigeration circuit 3 object of the present invention, which is suitable for carrying out a thermo-dynamic refrigerating cycle and is suitable for conveying a cooling fluid along a closed path according to an advance direction indicated with "A" in figure 1. The refrigeration circuit 3 works by a liquid-vapour phase change of the cooling fluid, and comprises a compressor 4, a condenser 5, a filter 18, a lamination device 6 and an evaporator 7, besides other optional devices suitable for improving the yield of the cooling cycle. The detailed operation of the refrigeration circuit 3 is beyond the contents of the present invention and therefore, it shall not be described hereinafter in detail.

Evaporator 7 defines a first heat exchanger which has the function of drawing energy in the form of heat from an inner portion of apparatus 1, and in particular from space 2, and transferring it to the cooling fluid circulating through evaporator 7. Space 2, which in the case of refrigerators is generally intended for storing food or in any case perishable food, is delimited by walls 8 and is accessible from the exterior of the apparatus, for example by one or more closing ports. More in detail, evaporator 7 comprises a tubing 9 that extends from a first end 9a, connectable (optionally through further tubing portions) to the lamination device 6, to a second end 9b which usually has the function of heat exchanger with the lamination device 6, connectable (optionally by further tubing segments as well) to compressor 4. Tubing 9 is intended for conveying the cooling fluid and allowing transfer of thermal energy (heat) from space 2 towards the cooling fluid circulating in tubing 9 itself.

Likewise, condenser 5 comprises a coil 10 which extends from a first end 10a, connectable to compressor 4, to a second end 10b, connectable to the lamination device 6 and that usually, contains a gas filtering element 18. Coil 10 is intended for conveying the cooling fluid and allowing transfer of thermal energy from the cooling fluid circulating in coil 10 itself towards an external environment wherein the apparatus is placed or towards a hot source.

Unless otherwise stated in the following description, coil 10 may consist of a tubing similar to tubing 9 mentioned above but with a smaller diameter, due to the higher operating pressures or, as an alternative, it maybe made by a metal tubing as it commonly happens at present in the refrigerating circuits on the market. According to the regulations in force, the cooling fluid belongs to classes HFC (hydrofluorocarbons), HC (hydrocarbons) or mixtures thereof. Preferably, the cooling fluid used is an aliphatic hydrocarbon such as isobutane, R600a.

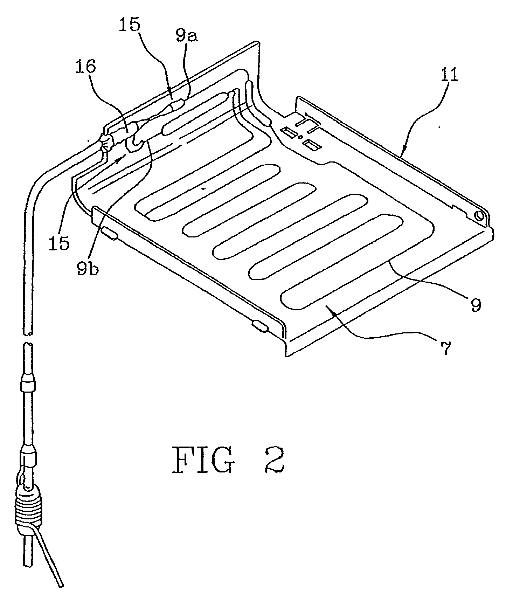

According to the configuration shown in figure 1, both tubing 9 and coil 10 are arranged according to respective winding paths (which by way of an example may form 180 degree deflections; however, other equivalent operating geometrical configurations may be taken, as better explained hereinafter), so as to substantially bend on themselves for taking a compact configuration suitable for obtaining an efficient thermal exchange. Figure 2 shows an example of embodiment of tubing 9 of evaporator 7, which is applied to a (bottom, or intermediate supporting) surface 11 of a refrigerator and is schematised with a thread-wise pattern to highlight the winding path of tubing 9 itself. More in detail, tubing 9 is built in a thickness of surface 11 so as to be steadily associated thereto but as an alternative, of course it may be positioned also inside a wall of the apparatus being buried into the same. Advantageously, tubing 9 is made of synthetic and preferably plastic material, so as to simplify the production processes and reduce the overall weight of the circuit.

Tubing 9 shall exhibit at least four peculiarities: it shall enable an appropriate heat exchange between cooling fluid and refrigeration system and therefore shall have limited thickness; it shall be not permeable to the cooling fluid that flows therein to prevent contamination of the environment and loss of refrigerating capability of the circuit, and it shall also ensure humidity/water impermeability to prevent infiltration (and consequent freezing) of the latter into the refrigeration circuit; moreover, the tubing shall also ensure impermeability to O₂ and N₂ (incondensable gases); finally the inner surface of the tube shall be such shaped as not to generate acoustic waves, upon passage of the gas, of such a nature as to cause trouble to users.

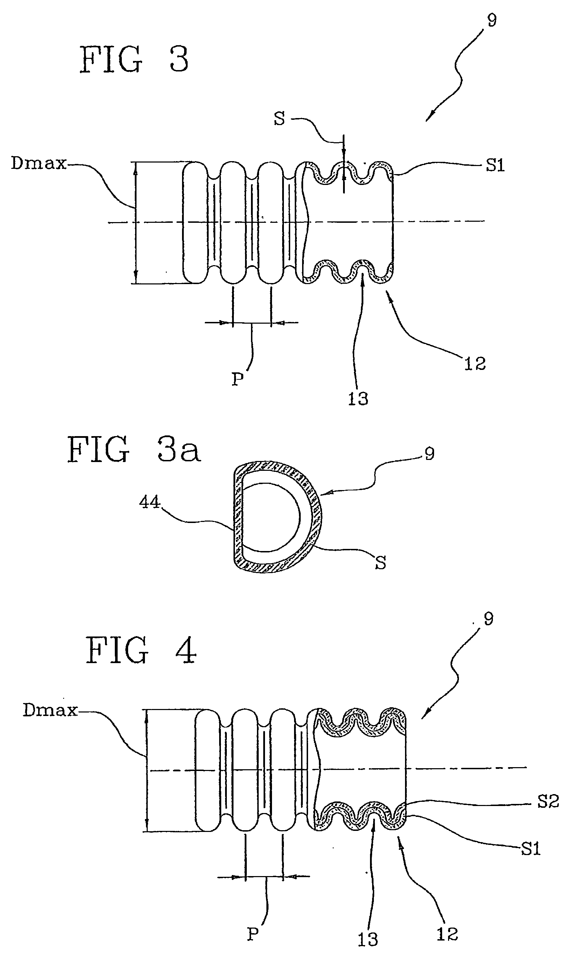

Tubing 9 is at least partly, preferably entirely or at least at the curves, defined by a corrugated tube, exhibiting a profile of the type illustrated in figure 3. In detail externally, preferably also internally, tubing 9 exhibits an alternation of protrusions 12 and recesses 13, alternating with one another for defining a substantially undulated outer profile, according to what illustrated in figures 3 and 4.

This advantageously achieves an increase of the turbulence in the passage of the cooling fluid that allows the heat exchange to be made more efficient.

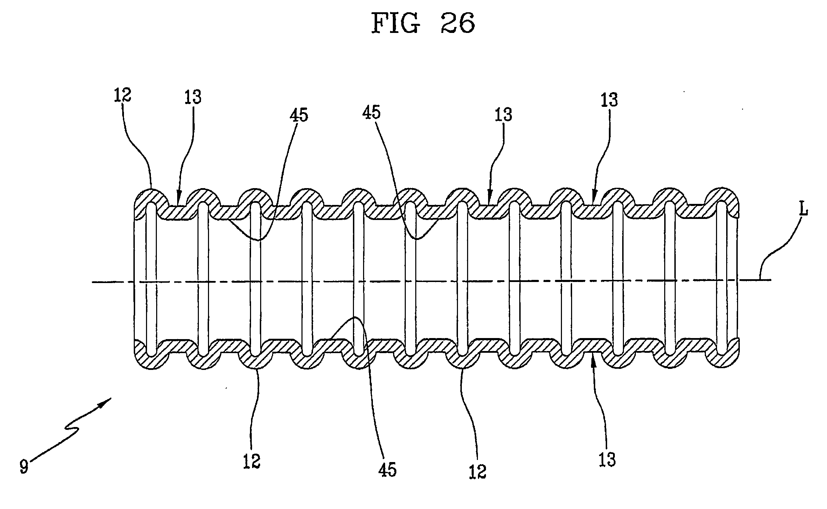

To avoid such turbulence generating acoustic waves (noise) that may be perceived in a bothersome manner by the users, a surface of said recesses 13 has been studied according to the form described in figure 26, which surface must be flat. Different forms generate cavitation phenomena that produce a very maddening noise.

Preferably, tubing 9 used for evaporator 7 has a maximum outer diameter "De-max" comprised between 6 mm and 14 mm and preferably within the optimum range 8-11 mm whereas the length of tube 9 for the evaporator will be comprised between 8 and 26 m based on the thermal exchange required and on flow resistance.

On the contrary, the optimum dimensions of the refrigeration circuit, in the condenser section (first heat exchanger 5), are as follows: maximum outer diameter De-max of the tube comprised within the range 5-10 mm and, preferably within the range 6-8 mm.

The above results from the fact that the cooling fluid going through the condenser is subject to higher pressures (condensing vapour) and thus this requires smaller cross dimensions of the tubing.

The tube length will be comprised within a range between 4-15 m based on the thermal exchange required and on load losses.

A fundamental feature of refrigeration circuits, besides ensuring the desired thermal exchange, is to constitute a barrier as much as possible impermeable to different agents.

Below are the agents and the typical limits application in question:

| Agent | Maximum admissible permeation | Unit of measurement |
|---|---|---|
| Isobutane | 0.5 | g/year |
| Oxygen+ Nitrogen | 1% | Molar fraction, relative to the coolant, admitted for the entire life of the refrigerator (10 years) |
| Water | 100 p.p.m | Fraction by weight, relative to the coolant, admitted for the entire life of the refrigerator (10 years) |

It is known that the refrigeration circuits work in a range of temperatures from -30° to +70°C and in a range of pressure varying from 0.3 to 12 bar; of course, the impermeability specifications of the above table must be kept within all of these ranges.

Moreover, in the standard operation of a refrigeration circuit, the lubricating oil of the compressor is partly and uninterruptedly carried along with the coolant it is perfectly soluble with.

The oil does not exhibit the features of the coolant, that is, those of evaporating at low temperature, and it is therefore carried by the suction current generated by the compressor along all the refrigeration circuit, or in solution with the coolant or in the form of droplets if (evaporator) the coolant has already evaporated.

To allow this transport of the coolant, the velocity of the cooling fluid should in general preferably be higher than 4 m/sec. If not, there is the risk that the compressor may be deprived of the oil that gets trapped in the corrugations of the tube and may burn out.

Of course this phenomenon poses limitations to the maximum sections of the circuit itself which will also depend on the type of corrugation. Cost issues also pose limitations to the maximum usable sections.

On the contrary, for reasons related to the thermal exchange and to flow resistance, it is important to have the maximum diameter of the sections of the refrigeration circuit higher than the minimum values mentioned above.

It is therefore clear that the dimensional and geometrical ranges shown above are not simple design choices but they are the result of a compromise that allows ensuring and maintaining of all the requirements of the refrigeration circuit.

Any variations outside the ranges mentioned above imply the non observance of one or more operating requirements and the impossibility of the refrigeration circuit to be used in the commercial practice.

The tube diameter, its length and the shape of the profile corrugation are also involved in the generation of noise inside the tube by the effect of turbulence and of the frequencies of the vortices generated inside the tube itself.

Figure 26 shows a configuration of tubing 9 wherein alternated protrusions 12 and recesses 13 define an undulated shape.

However, relative to the configuration in figures 3 and 4, the recesses 13 seen in section each have at least one straight portion 45 particularly with an extension parallel or essentially parallel to the tubing axis L.

In other words, the top portion of the recess 13 is flattened so as to enable passage of the fluid inside piping 9 minimising cavitation phenomena and therefore minimising noise generation.

The corrugation and the selection of the diameter must therefore take into account also this aspect and all the aspects related to the tubing shape.

Tubing 9, in a possible embodiment, has a pitch "p", that is, the distance between two consecutive protrusions 12, preferably equal to 2 mm. Moreover, the tubing may have a shape ratio, that is, the ratio between the outer side surface of a portion of tubing 9 and a corresponding longitudinal length of the portion itself, comprised between 20 mm²/mm and 60 mm²/mm. Advantageously, the corrugated shape of tubing 9 causes an increase in the outer surface of tubing 9 itself relative to a cylindrical tubing having the same length, and in this way the thermal exchange between the cooling fluid circulating inside tubing 9 and the air outside the same is facilitated.

Advantageously, moreover, the corrugated profile of tubing 9 of plastic material makes the same more flexible compared to a similar cylindrical tubing, allowing bending radiuses and angles that otherwise would cause the squeezing thereof (with reduction of a passage section of the cooling fluid) and thus, adaptable to be arranged according to a plurality of different configurations by simply bending tubing 9 without intervening by plastically and irreversibly deforming tubing 9 itself. According to an embodiment not shown, tubing 9 may exhibit only some corrugated portions, in particular only the portions intended for defining curved portions in the path of tubing 9 itself or those where thermal exchange is to be maximised. The remaining portions of tubing 9, in that case intended for defining rectilinear portions, may be smooth or in any case free from surface shaping. In the case of smooth portions, the inside diameter of the tubing will be comprised between 4 and 11 mm and preferably between 6-8 mm.

Tubing 9 may advantageously be produced by an extrusion process, wherewith a hollow cylindrical extrusion is obtained which may be further modified by in line finishing processes, for obtaining a desired profile of tubing 9. In particular, the extrusion process may be followed by a shaping step that imparts the corrugated shape illustrated in figure 3 to the entire hollow cylindrical body or only to a portion thereof. This may be obtained by coupling a counter-shaped matrix to the corrugated profile to be obtained externally of the hollow cylinder body, and generating such pressure inside the body itself as to plastically deform it forcing it to take a shape counter-shaped to the matrix. Preferably, this step is carried out when the hollow cylindrical body is still at a high temperature, corresponding to a state suitable for a plastic deformation process. As an alternative, instead of an internal pressure it is possible to generate a depression between the hollow cylindrical body and the matrix, so as to force a reciprocal approach of the same and a deformation of the hollow body that takes the matrix shape. The shaping operation described above leads tubing 9 to take a corrugated profile both internally and externally, according to the view of figure 3, and this imparts the flexibility properties mentioned above and the turbulence properties of the cooling fluid circulating therein.

Besides having circular shape as in figure 3, the geometry of the section of the corrugated tube can have also other shapes that aid in improving the thermal exchange. For example, on chest freezers, evaporator 7 is wound about a metal rack. The tube presently used, metal as well (mainly aluminium) generally has a circular shape and therefore it has a very small contact surface with the metal rack that may be indicated in a single line on all the tube length. Using a corrugated tube, suitably acting on the extrusion section and on the corrugator shape, it is possible to obtain the D section of figure 3a which, while maintaining its flexibility required for winding the tube about the rack, allows the exchange surface to be increased as well as the performance of the freezer to be considerably improved and the cost decreased. According to the embodiment illustrated in figure 4, tubing 9 is obtained by a multilayer extrusion process (co-extrusion) suitable for improving the mechanical and impermeability properties of tubing 9. In fact, with a multilayer extrusion process it is possible to obtain a tubing 9 having two or more layers, each suitably selected based on specific functions to be carried out such as, referring to what already said before, impermeability to the cooling fluid, impermeability to humidity and to incondensable gases, flexibility, thermal conductivity, as well as resistance to the pressure exerted by the cooling fluid.

According to a first requirement thereof, tubing 9 comprises a first layer "S1", typically outermost, made of a material provided with features adapted for imparting to tubing 9 the necessary resistance to mechanical and thermal strains and impermeable to the cooling fluids commonly used in cooling apparatus for household purpose (hydrocarbons), and in particular R600a. Preferably, such material is a polyamide 6; 6-6; 6-12; 11; 12 or one of the respective copolymers, preferably polyamide 6-6.

According to a second requirements, tubing 9 comprises a second layer "S2", usually innermost, made of a material impermeable to water and resistant to hydrolysis (i.e. also N₂ and O₂) and characterised by good compatibility with the material of layer S1. Preferably, such material is a copolymer, for example of the type Bynel® by the company DuPont like Bynel® 4206, low density polyethylene modified maleic anhydride or Bynel® 50E662, polypropylene modified maleic anhydride. The second layer "S2" is combined, that is, overlapped, to the first layer "S1" for making a protection of the cooling fluid to any introduction of humidity or water coming from the exterior, improving at the same time the chemical inertia of the tube against the above cooling fluids.

In general, the overall thickness S of the tube will be comprised between a minimum and maximum value of 0.4 - 1.5 mm and of a preferred range between 0.6 and 1.2 mm. Thickness S1 of the material barrier to humidity and water is comprised between 20% and 40% of the total thickness and is about 30%.

On the contrary, thickness S2 of the material barrier to the cooling fluid and air is about 70% of the total thickness (in general comprised between 60% and 80%). The thickness of the first layer S1 is comprised between 0.2 mm and 0.4 mm whereas the thickness of the second layer S2 is preferably comprised between 0.4 mm and 1 mm.

To alternatively reduce the molar fraction of water in the circuit, it may be necessary to search for balance conditions of the refrigeration circuit that provide for the use of different materials for balancing the permeability of water between condenser 10 and evaporator 7.

Since condenser 10 operates at a higher pressure (2.5-7 bar) than the evaporator (normally 0.5-2.5 bar - the pressure of 2.5 bar common to evaporator and condenser takes place at stationary circuit), it may be useful for the latter to consist of only the material PA6-6 or PA12 without the waterproof layer.

During the operation of the compressor, the condenser allows the water entered through the evaporator to go out again thus maintaining a balanced situation. This allows maintaining of the water molar fraction inside the circuit below certain critical values that the current regulations set to 100 ppm.

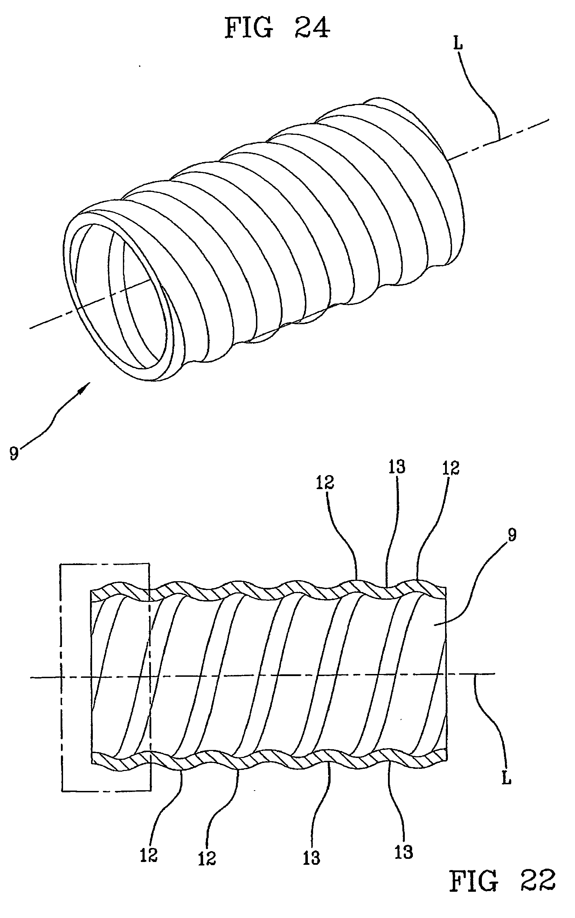

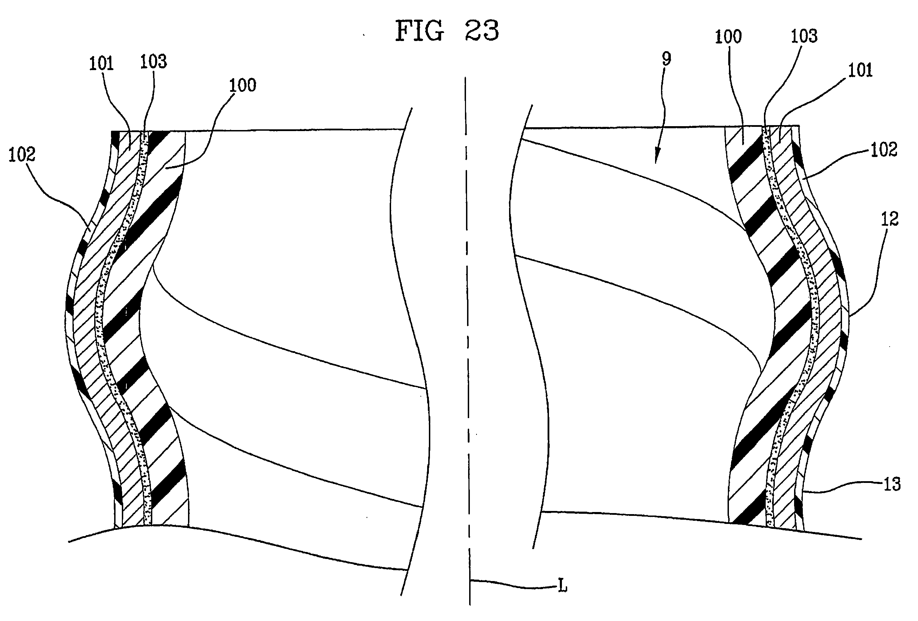

In a possible embodiment of tubing 9, shown in figures 22 and 23, suitable for applications both as an evaporator and as a condenser, accomplishment of flexible corrugated tubes with metal coating is provided, to enable a flexible plastic tube to be protected, thanks to addition of the optimal barrier properties given by the metal coating.

Looking at figure 23 in particular, which shows a section of the tubing referred to in figure 22, the presence of at least one inner layer 100 of plastic material is first of all noticed and in detail of thermoplastic material such as polyamide, for example PA 6-6.

The inner layer 100 of thermoplastic material performs a structural function, i.e. that of holding and maintaining the tubing shape (note that flexibility is ensured due to the presence of the corrugated undulations, i.e. of the alternated protrusions 12 and recesses 13 mentioned above).

Still looking at figure 23, it is possible to also see the presence of a constraint layer 103, in particular a layer of adhesive material interposed between the plastic layer 100 and a following layer of metal material 101 superposed thereon at the top.

The layer 103 of adhesive material acts as a binder for the metal layer allowing steady coupling of the latter to layer 100 of structural thermoplastic material.

The metal layer 101 is generally flexible, i.e. it performs no function as structural support of tubing 9 and for example can consist of a thin layer comprising or made up of a single- or multi-layer film of metal material such as aluminium for example, of a thickness in the order of some microns.

For instance, a layer 101 consisting of two substrates/metal films can also be used, inside which there is a substrate of a material capable of maintaining its shape following deformation (for example a cellulose-based material such as paper).

By so doing, it is possible to mechanically deform layer 101 to cause it to mate the tube corrugation and remain adherent thereto until laying of an outer coating layer 102.

The embodiment that can be adopted in a non-limiting first solution shall involve an aluminium-paper-aluminium multi-layer film or an aluminium single-layer film suitably shaped and held on the tube surface by the coating layer 102.

It may be also provided that the lower surface of the metal layer 101 be coupled to an adhesive lake material (or similar adhesive material) actually defining said layer 103.

This type of arrangement in layers of the tube allows different problems to be eliminated in a simple and efficient manner, in particular on evaporators, the first of which is the problem concerning the excessive permeability towards the water vapour, exactly by virtue of the properties of the metal layer.

Still referring to figure 23, at least one coating layer 102 is also present, which preferably is of plastic material as well, for protecting and/or fastening the metal layer 101. The coating layer 102 fully covers the metal layer 101 and has the function of further fastening said metal layer 101 and also a coating function enabling high protection to be ensured against chemical attacks of the underlying metal or, also, electric insulation between the aluminium sheet 101 and the external environment.

As a further alternative solution, the outer coating layer can be already coupled to layer 101 and possibly be heat-shrinkable, so that, by effect of heat, shrinkage of same occurs thereby forcing the metal layer 101 to adhere to the outer surface of the corrugated tube.

It should be also noted, as shown in figures 22 and 24, that tubing 9 (or a portion thereof) has a corrugated shape with helical course of the corrugation along the extension axis L of the tubing.

Shown in figure 26 is a flat configuration of the corrugation recesses 13, adapted to minimise the cavitation phenomena and the turbulence that, in the absence of a flat shape, would produce noise hardly acceptable by users.

It is also to be pointed out that this configuration of the recesses can be adopted both in tubing with a helical corrugation and in tubing with a corrugation of the type shown in figure 3 or 4.

The tubing production process in accordance with figures 22 and 23 is the following:
- extrusion and generally (although not necessarily) simultaneous corrugation of the tube of thermoplastic material is carried out, so that said helical corrugation is obtained.

A layer of adhesive material 103 can be either coextruded with the first thermoplastic layer 100 or applied to the inner surface of the aluminium film. Then a single- or multi-layer film is laid which contains or is made up of one or more layers of metal material (possibly made adhesive on a surface thereof - the external one - or on both of them) and then a plastic coating is laid by an over-extrusion process, the function of which is to cling/to fasten the metal coating (the last-mentioned process becomes useless when the aluminium film has been previously made adhesive).

In particular, accomplishment of the corrugated profile of helical shape allows application of the metal layer to be automated.

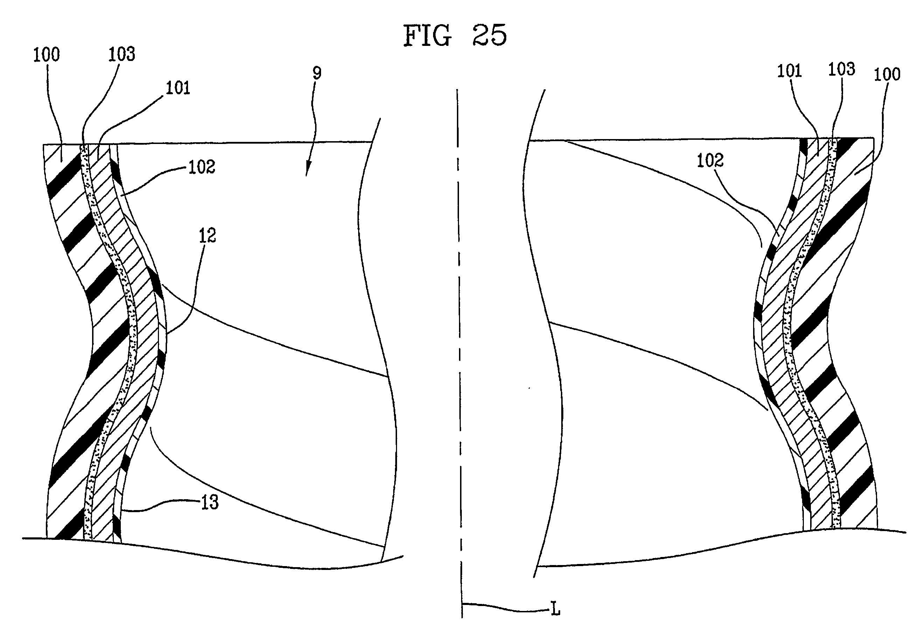

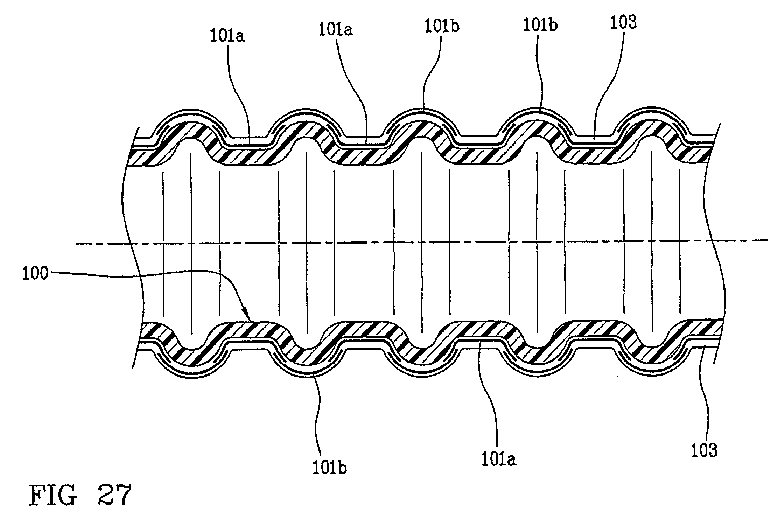

Continuous laying of the coating with metal layer on the corrugated tube obviously allows important process savings. To facilitate bending of the metal film and adhesion of same to the plastic surface 100, the film can consist of two or more ribbon-like elements of aluminium film that, after laying on the tube, will be superposed on each other so as to make them perfectly gas-tight and, at the same time, perfectly adherent to the tube. This situation is shown in figure 27 where the two ribbon-like metal elements are denoted at 101a (the corrugation valleys being coated) and 101b (the corrugation hills being coated) or vice versa. In this case too an outer coating 103 can be present and the surfaces of the ribbon-like aluminium elements can be treated with an adhesive material so as to make them adhere to each other and to the plastic material. This configuration also allows more flexibility of the tube. Following a process similar to the one described above, the metal film or films can be inserted into the plastic tube (figure 25).

In this case the film can be inserted into the plastic tube both during extrusion, by using, by way of non-limiting example, a T-shaped extrusion head and feeding the metal film (or the ribbon-like elements) in line with the outlet of the plastic tube.

The metal film can be coupled to other metal or plastic films, preferably before use, in such a manner as to generate surfaces having the desired features, such as a plastic coating on the surface in contact with the cooling gas or an adhesive layer allowing union of same to the plastic tube.

The metal film can be also used as a resistance for defrosting of the evaporator.

In this case a potential difference will be applied thereto of such a nature as to create a current enabling heat generation and the surfaces of the metal film will be coated with an insulating layer.

Going back now to the exemplifying diagram of figure 1, the above filter 18 is noted, which is arranged between the first exchanger 5 and the lamination device 6 and is suitable for removing any humidity present in the circuit, for example by the use of a gel capable of absorbing it.

The lamination unit 6, on the contrary, comprises a capillary tube 19 for reducing the pressure in the passage of the cooling fluid between the first exchanger 5 and the second exchanger 7. Moreover, in its path it also performs a function of energy recovery exchanging heat between the hot coolant at the liquid state that flows therein and the cold vapour present in the tube at the outlet of evaporator 7.

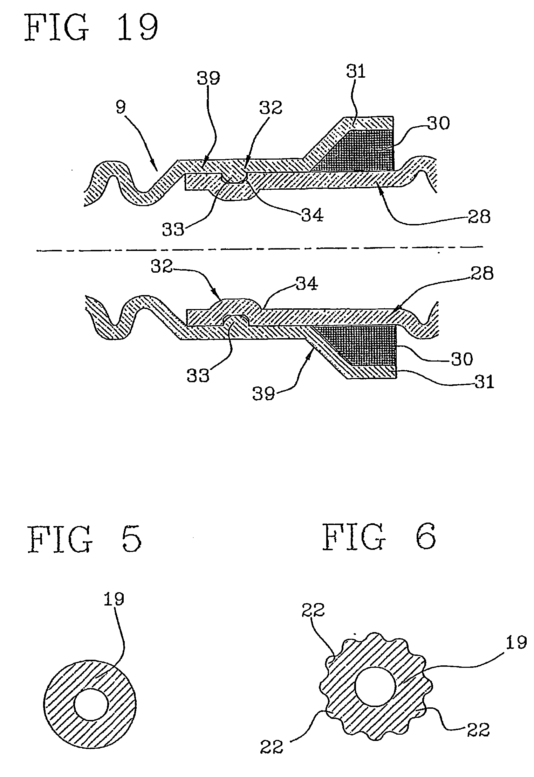

This thermal exchange operation is carried out in the so-called "exchanger tube" shown enlarged in figure 1. In order to make the thermal exchange more efficient, with the same length of the tube and thus same flow resistance that is desired in the capillary, it is possible to make the capillary tube with a section different from the standard one illustrated in figure 5.

For example it will be possible for at least the portion of capillary tube 19 that performs the heat exchange to exhibit an outer surface of larger area than that of the tube with circular section; in that case, the section of the capillary tube 19 may exhibit one or more lobes 22 for increasing the thermal exchange.

The "lobed" section is illustrated in figure 6 and its primary purpose is to increase the outer surface of the tube that exchanges heat with the cooling gas outside. In fact, always as visible in figure 1, at least one portion of the capillary tube 19 is placed inside a portion of tube 21 in output from evaporator 7 for allowing energy recovery.

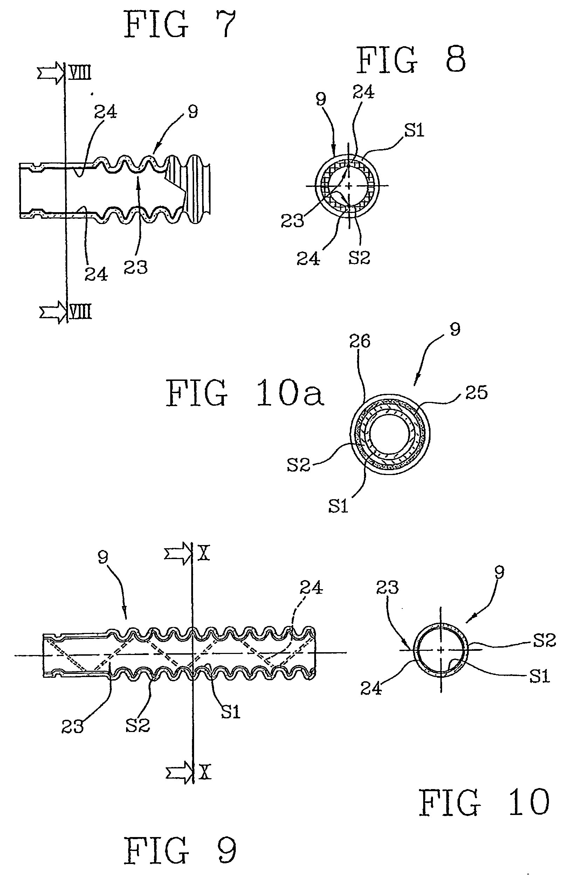

Tubing 9 (figures 7, 8, 9, 10) then comprises heating means 23 steadily coupled for allowing a selective defrosting of evaporator 7 when required.

In dynamic or No Frost evaporators, the defrosting function of the evaporator circuit is carried out automatically by the intervention of electrical resistance external to the circuit.

This method of defrosting is not very efficient as it is based on the heat transmission from the electrical resistance of the ice formed on the tubes by radiation. In the present finding the aim is to obtain the defrosting of the ice by the heating means 23 that are differently coupled in a steady manner to tubing 9. The heating means 23 comprise, in a first embodiment, at least one metal conductor 24, having by way of non-limiting example, a thread-like structure constrained to a layer S of tubing 9 (see figures 7, 8, 9, and 10).

In general, the metal conductor 24 is constrained to the second layer S2 inside tubing 9 as in particular it is coextruded with the same and is therefore at least partly buried.

Figures 7 and 8 show the presence of two electroconductive wires arranged with prevailing pattern substantially parallel to the development direction of tubing 9.

On the contrary, figures 9 and 10 show the adoption of a thread-like metal conductor 24 wound spiral-wise around the axis of development of tubing 9.

In an alternative embodiment (or optionally in combination with the previous one), the heating means 23 comprise a layer of conductive material 25 obtained on a surface, preferably external, of tubing 9 (see figure 10a).

The embodiment of such conductive layer 25 may be obtained according to different technologies, such as metallization of the tube surface to be made by metallization in high vacuum, by deposition of conductive nanoelements on the tube surface, etc.

As an alternative it will be possible to coextrude a thin layer of conductive thermoplastic material that has the same function.

Alternatively, it will be possible to use as the conductive element 25, the metal film 101 already described above, in which case attention must be paid that the potential difference applied will generate sufficient heat for defrosting the evaporator within the established times, without however overcoming the softening temperatures of the materials forming the plastic tube.

The coating of the tube with nanoelements may constitute both a further barrier to the inlet of water into the refrigeration circuit and, for the peculiarity of the surface thereof, a factor of increase of the thermal exchange with the air.

In general, at least one insulating surface coating 26 will be provided for protecting the heating means 23 from the environment outside tubing 9 (fig. 10a).

In particular, such surface coating 26 may be obtained by deposition of an insulating polymeric film or by other surface coating treatments.

The heat required for defrosting the ice is thus transferred by the heating means 23 by direct conduction from the resistance buried in the tube to the ice, thus considerably increasing the efficiency of the defrosting system and reducing energy consumption. It should be noted that the types of resistance mentioned above are flexible and thus they do not impair the possibility of bending typical of corrugated tubes.

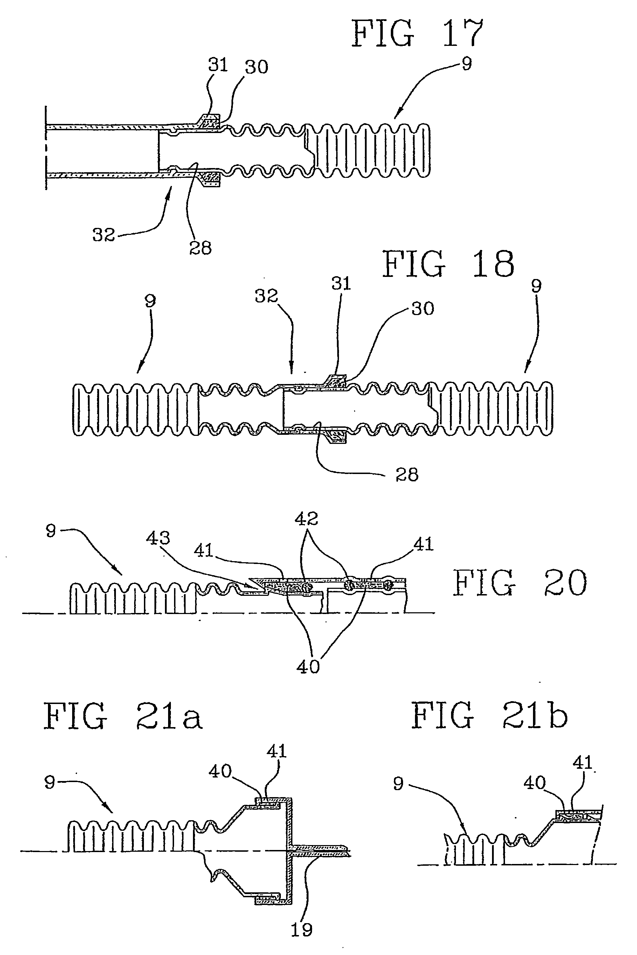

Advantageously, according to an embodiment illustrated in figures 17, 18 and 19, tubing 9 may be obtained both by direct extrusion and corrugation with elements of different sizes, and by the assembly of two or more tube portions, preferably corrugated (figure 18) but not necessarily so (figure 19), having dimensional modularity features. In other words, tubing 9 may be obtained from the reciprocal coupling of two, and preferably a plurality of, portions of corrugated tube preferably having same dimensions both in section and in length. This allows obtaining tubing 9 having different lengths starting in any case from portions having the same standard length, and thus suitable for facilitating respective storage processes. In this case in fact it is necessary to have only a reduced range of portions stored, or optionally only one type of tubes, which are then assembled in a sufficient number to make a tubing 9 having a desired length.

As mentioned before, a less expensive system that prevents junctions may be obtained by extrusion and continuous corrugation of the different parts of the refrigeration circuit using elements of the corrugator made according to different geometries.

Some possible assembly solutions of the various components of the refrigeration circuit shall now be illustrated hereinafter.

The details of the junctions illustrated may be made with alternative methods, such as vibration welding, laser etc.; the purpose of the junctions is to provide a connection of mechanical and/or physical and/or chemical type, which should be impermeable to the cooling gas and to the other gases and humidity mentioned above.

In general, the circuit will exhibit a plurality of coupling terminals or connectors 15 for mutually connecting multiple portions of tube belonging to the refrigeration circuit or connecting the tube itself to the various components.

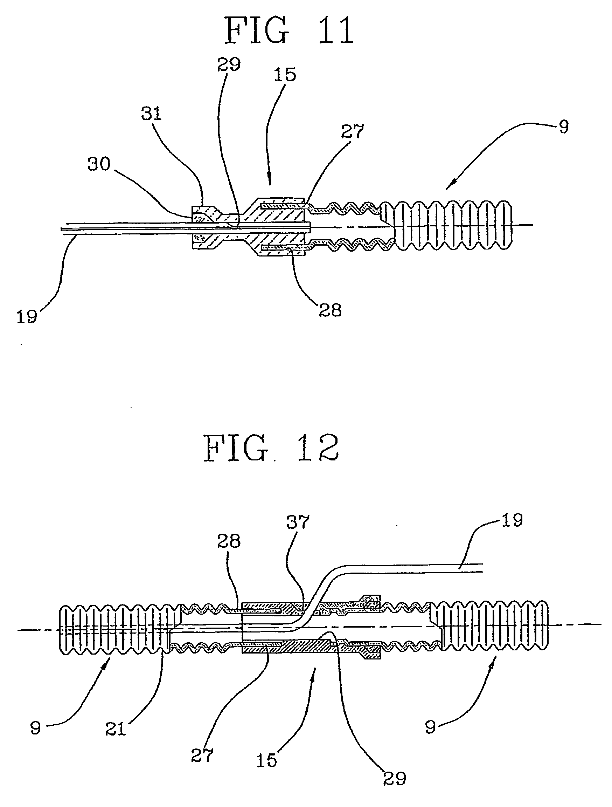

Figure 11 shows a possible embodiment of the connection between the capillary tube 19 and the corrugated tube 9 belonging to the evaporator.

In particular, connector 15 comprises a seat 27 suitable for receiving an end 28 of tubing 9; the seal between connector 15 and tubing 9 is ensured by a suitable welding.

Connector 15 further comprises a through cavity 29 for allowing the passage of the cooling fluid between the connected tubes and the connector itself. In particular, the capillary tube 19 entirely crosses the above through cavity directly bringing the cooling fluid at the inlet section of the corrugated tube 9.

In order to ensure the seal between the capillary tube 19 and connector 15, the latter comprises a shaped seating portion 31 suitable for being crossed by the end of the capillary tube 19 for defining in cooperation with the latter an irremovable constraint area 30. The constraint is preferably obtained using suitable glue.

Going to look at figure 12, it should be noted that the same shows a detail of the exchanger tube, that is, of the portion of tube wherein the capillary is within tubing 9 for making the above thermal exchange.

As it may be noted, the coupling in the left portion between the connector and the tubing portion 21 that contains the capillary may be obtained by welding, using the above seat 27 that receives end 28 of tubing 9 and the welding technology.

Connector 15 then comprises an inlet/outlet hole 37 for allowing the passage of the capillary tube 19 from inside tubing 9 to the outer environment and vice versa (to this end it should be noted that the inlet zone of the capillary tube will be a mirror image or with different configurations compared to that shown in figure 12 where the outlet takes place).

It should then be noted that the connection between the exchanger tube with the return tube from the evaporator exhibits both a glued junction zone (exchanger tube + capillary tube with return tube), and a junction welded by rotation (exchanger tube to the connector).

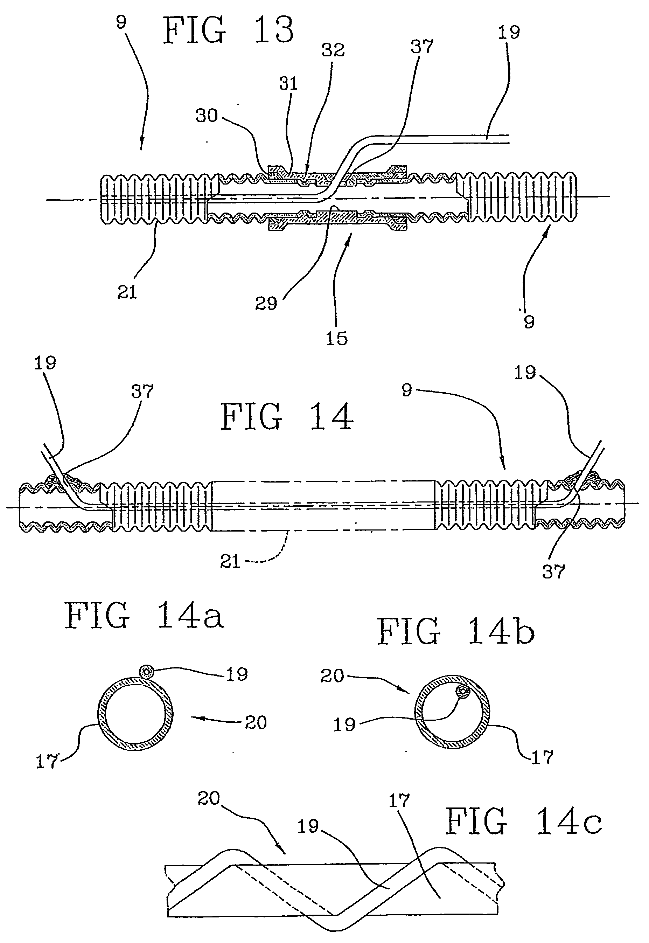

Figure 13 shows an embodiment version of connection between the exchanger tube with the return tube from the evaporator: in fact, such junction is entirely made by gluing.

In particular, the shaped seating portion 31 and the tube end define first coupling means 32 for allowing a first holding into position to the purpose of a subsequent irremovable constraint.

In particular, the first coupling means 32 of figure 19 comprise respective expansions 33 and recesses 34 respectively defined in one or in the other of the shaped seating portions 31 and of the ends of the tube to ensure a first engagement by interference that maintains the reciprocal position during the subsequent permanent junction steps.

During assembly, such expansions 33 and recesses 34 are placed relative to each other so as to ensure the keeping of the position during the irremovable constraint steps (by glue, welding or the like).

The same type of first coupling means 32 may be used for connecting subsequent tubing portions directly to one another, as clearly shown in figure 19.

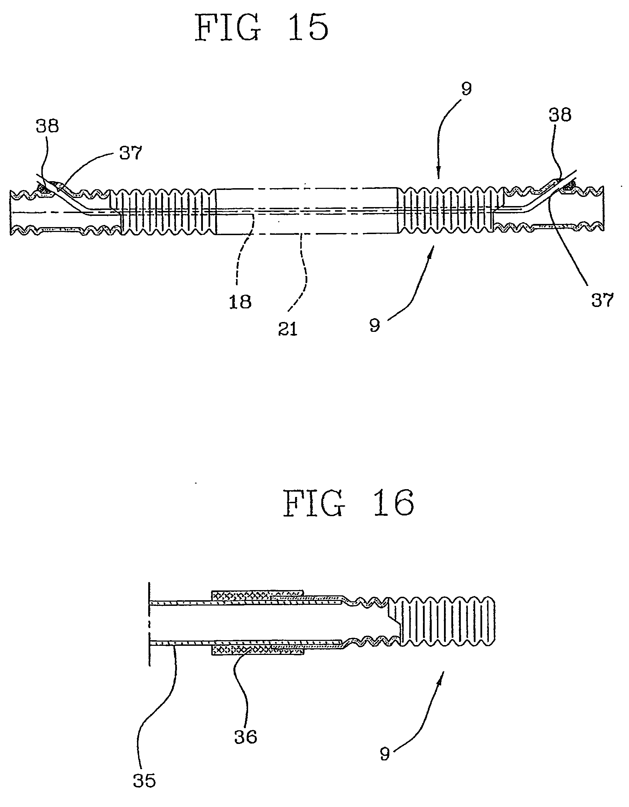

Finally, it should be noted that to avoid the use of connectors at the exchanger tube, it is possible to adopt the solutions shown in figure 14 and in figure 15, that is, make an inlet/outlet hole 37 in said tubing 9 for allowing the passage of the capillary tube from the exterior to the inside of tubing 9 and vice versa. The fluid seal may be ensured by glue or welding.

Figure 15 shows an embodiment version wherein the inlet/outlet hole 37, instead of being made at the normal corrugations of the tubing, is defined in a preshaped zone 38 suitable for defining a flat inlet/outlet area of the capillary tube that is substantially parallel to the axis of the tube itself.

In this way it is possible to define a reference surface and ensure better gluing and seal between the tubing.

In this way, only the seal of the capillary in input and output from the tube is required without further necessary processes.

Finally, figure 16 shows how to connect metal tubes belonging to the circuit (for example the inlets and the outlets from the compressor identified with reference 35) to tube 9 according to the invention.

In particular, an end of tubing 9 overlaps a corresponding end of a metal tube 35 and there is an over-moulding element 36 for irremovably constraining said ends.

In the preferred and illustrated embodiment, only evaporator 7 comprises a flexible tubing 9 made of plastic material, whereas condenser 5 comprises a conventional metal coil 10 which is welded to the remaining part of the refrigeration circuit 3. However, it is possible to make an apparatus 1 exhibiting both coil 10 of condenser 5 and tubing 9 of evaporator 10 of synthetic material, preferably one or more plastic materials of the type described above.

The present invention attains the proposed objects, overcoming the disadvantages mentioned in the prior art.

The use of connectors that in any case are elements of discontinuity in the circuit and that have a certain cost, may be avoided using corrugators of higher length and provided with shaping elements shaped to obtain different sections in the same continuously extruded corrugated tube; the above sections with special shape, for example required for coupling to the copper tube (35), may be obtained by continuous extrusion and corrugation with shaped elements of the end sections of the tube. In the same way, the exchanger tube 17 may be extruded continuously with tube 9 of evaporator 7, inserting in the corrugator, if required, shaped elements that allow obtaining section 38 for inserting capillary 19 and the final portion 36 for over-moulding. In this way it is possible to prevent some coupling joints, making the refrigeration circuit safer and less expensive.

The presence of a flexible tubing allows a very simple and elastic installation of the same on the household appliance, since no definition in advance of the tubing configuration is required but on the contrary, the latter is bent in optimised and diversified manner according to the requirements of space and shape of the thermal exchange surface to be covered.

The corrugated shape, at least in portions, of the tubing allows an increase in the thermal exchange surface since the corrugated shape of the tubing exhibits a greater outer surface than a corresponding smooth or in any case perfectly cylindrical tubing. Moreover, the corrugated shape also inside the tubing itself allows generating whirling motions in the cooling fluid that positively affect the thermal exchange made by the fluid itself.

The lamination device 6 and part of the exchanger tube 17 constitute a tubular exchanger having as the inner tube a calibrated polyamide tube, wherein the liquid to be cooled flows, and an outer tube, optionally coextruded with the inner one (figures 14a, 14b) or rolled up or coextruded/rolled up (14c) externally or internally of tube 17, wherein the vapour to be heated for being then compressed by the compressor without droplets flows. The device described above may be entirely made of plastic material and in the desired shapes, unlike what occurs presently using metals which, for obvious reasons, limit shapes and length thereof.

As said, tube 17 may also be obtained as a simple extension of tube 9 of evaporator 7 thus eliminating a junction.

Both such device and the various components of the refrigeration circuit, are then suitable for being made by coextrusion of plastic material with inserted one or more thin metal wires, usable as resistance for quick defrosting of the evaporator or any other part of the circuit, or for overheating the vapour to be sent to the compressor.

In other words, and if required it will thus be possible (even independently of the corrugation of the tubing or portions thereof) to bury such resistance elements (wires of metal or conductive material) in predetermined portions of the tubing for defrosting or heating one or more parts of the circuit.

As an alternative (or in combination) it will be possible to provide for the tube or portions thereof to be made by coextrusion of one or more layers of plastic material covered with a special lake (further outer layer) containing conductive nanoelements; such lake will be applicable by spray during the extrusion or afterwards on the already assembled work or as an alternative even by immersion in a special bath and will have the characteristic of generating heat when crossed by an electrical current, so as to carry out the function of defrosting or heating device for specific zones of the refrigeration circuit. Condensers 10 may be made similarly to what described for evaporators 9, making the plastic material tube shapes and sizes in the most suitable possible manner for the operating requirements of the refrigerating appliances.

Condensers 10 operating upstream of the compressor must operate at higher pressures than those of evaporators 7.

For this reason, they should meet more restrictive rules, in particular they should withstand a pressure as high as 36 bar.

For this reason, the thickness of corrugated tubes must be increased to no less than 0.7 mm (preferably 0.8-1.4 mm) and it is thus important to increase the thermal exchange surfaces making suitable geometries.

All these components of the circuit may be coupled to each other by the above connectors, allowing assembly saving (they are presently welded to one another) and assembly safety.

The connections between the components of the refrigeration circuit (evaporator, capillary, exchanger tube, compressor, condenser and filter) may be obtained by rotation welding operations or gluing by the use of quick connections with seals (O-rings or alternative ones) as the sealing element.

It is also possible to make such shapes on the corrugated tube as to allow snap-wise coupling and creating the deposition seat of a sealing adhesive or a special sealing element such as for example an O-ring of suitable material (figure 20) with the placement of glue 40 for sealing the space between the two sealing elements 42 and 43. The glue may be inserted through hole 41 (two symmetrical holes may be required for air venting).

Moreover it should be noted that the particular shape of the capillary appears advantageous in se, irrespective of the presence of corrugated plastic tubes; also the connectors described above are per se usable and independent of the presence of corrugated plastic tubes.

The described invention thus eliminates the complex and expensive processes for making the metal tube and bending the same for obtaining the traditional metal coil of the evaporator, and the range of products on stock is reduced since it is necessary to store only the tubing that has not received the final winding and bent configuration yet. Also the need of storing the tubing may be easily eliminated having an extrusion and corrugation line for the plastic tube, the cost whereof is at least 20 times less than a production line for metal tubes and for operation of which a covered surface much smaller than that necessary for a production line of the metal tube is required.

The manufacture of the tubing of plastic material and in particular by extrusion or coextrusion processes drastically reduces the costs of the raw material required to make the various components of the refrigeration circuit and greatly simplifies the manufacturing processes of the tubing itself with consequent drastic decrease in the manufacturing costs of the household appliance. Moreover, this allows the mass of the household appliance to be greatly reduced, replacing the conventional metal coil with a coil of plastic material.

The possibility of obtaining a tubing starting from modular portions of tube further facilitates storage as only few types of tube portions may be provided, having predetermined lengths and sections.

The coupling of the tubing to the remaining part of the refrigeration circuit does not require anymore the making of the traditional welding which besides requiring special apparatus and being mainly made manually, is also irreversible and thus it would not allow removal of the tubing from the household appliance.

The availability of quick connectors, the possibility of having coextruded tubes that perform the function of heat exchangers and the possibility of alternating parts of straight and rigid tube to corrugated parts to be bent as desired, allows different shapes and sections to be created in the refrigeration circuits such as to open new perspectives to design, to the functionality and to the performance of the circuits themselves.

Also in this case, special corrugators being available, it is possible to make different sections without discontinuities requiring the use of joints. For example, the condenser tube 5 may be coextruded to tube 10b and having special elements in the corrugator, the seat of filter 18 may be obtained in the same way without the use of connectors with the economic and safety advantages described above (figures 21a and 21b).

There are further advantages, such as resistance to corrosion, less surface porosity making it more difficult for the ice to stick to the surfaces, recyclability of the materials used for the refrigeration circuit without the need of expensive operations for separating the components, which contribute to making the proposed technology even more competitive and advantageous compared to the current one.

## Claims

1. A refrigeration circuit (3) for household appliances, in particular household appliances for cooling such as refrigerators, freezers and the like, comprising:
- at least one first heat exchanger (5), suitable for being brought into fluid communication with a compressor (4), for allowing cooling of a cooling fluid substantially in the liquid phase passing therethrough;
- at least one second heat exchanger (7) in fluid communication with said first exchanger (5) and active at a space (2) to be cooled, said second exchanger (7) allowing the cooling fluid at least partly in the gaseous phase to absorb heat thereby cooling said space (2), the cooling fluid circulating from the first exchanger (5), towards the second exchanger (5) and thus being directable to a compressor (4) for a subsequent cycle; and
- a throttling device (6) arranged between said first (5) and second (7) heat exchangers for generating an expansion of said cooling fluid, at least one of said first (5) and second (7) heat exchangers comprising at least one flexible tubing (9), **characterised in that** at least one portion of said tubing (9) exhibits such a corrugated profile as to impart flexibility thereto, and **in that** said tubing (9) seen in section exhibits at least one layer (100) of plastic material and at least one layer (101) comprising metal material, the metal layer (101) being associated with the layer of plastic material, said metal material being adapted to constitute a barrier to passage of humidity, wherein said layer (100) of plastic material is a layer the structural function of which is to maintain the shape of tubing (9), said layer (100) being made of a thermoplastic material,
wherein said metal layer (101) is flexible, has no function of structural support and comprises a single-layer film of metal or a multi-layer film comprising one or more metal films coupled or not to a layer of material adapted to maintain a deformed shape.

2. A circuit as claimed in the preceding claim, **characterised in that** said tubing (9) comprises at least one coating layer (102), preferably of plastic material and possibly consisting of a heat-shrinkable film, for protection and/or fastening of the metal layer (101).

3. A circuit as claimed in anyone of the preceding claims, **characterised in that** the tubing (9) has at least one corrugated profile with helical course of the corrugation along the longitudinal extension of the tubing.

4. A circuit as claimed in anyone of the preceding claims, **characterised in that** the corrugated profile of the tubing in section comprises an alternation of protrusions (12) and recesses (13), said recesses (13) having at least one straight portion (45) with a course preferably substantially parallel to the axis L of the tubing (9).

5. A circuit as claimed in anyone of the preceding claims, **characterised in that** said tubing (9) further comprises a constraint layer (103), preferably a layer of adhesive material, interposed between the plastic layer (100) and the layer of metal material (101) to enable mutual constraint of the two layers (100, 101).

6. A circuit as claimed in anyone of the preceding claims, **characterised in that** the layer (100) of plastic material is made of a polyamide such as Pa 6-6.

7. A circuit as claimed in anyone of the preceding claims, **characterised in that** the coating layer (102) fully covers the metal layer (101) with the function of clinging and chemically protecting the metal layer.

8. A circuit as claimed in anyone of the preceding claims, **characterised in that** said layer of material adapted to maintain a deformed shape is made of paper material.

9. A circuit as claimed in anyone of the preceding claims, **characterised in that** the metal layer 101 is made up of 2 or more metal ribbon-like elements 101a and 101b overlapping each other in the longitudinal section of the tubing (9) at the respective edges, preferably the metal layer (101), or the ribbon-like elements (101a and 101b) being previously treated so as to have a layer of a material made adhesive on one or both of the upper and lower surfaces thereof.

10. A process for producing a tubing for refrigeration circuits for household appliances, **characterised in that** it comprises the following steps:
- extruding a tube of plastic material, the extrusion step preferably comprising a step of coextrusion of a layer (100) of thermoplastic material and possibly of a superposed layer (103) of adhesive material acting as a binder, wherein said layer (100) of plastic material is a layer the structural function of which is to maintain the shape of tubing;
- corrugating at least one portion of said tubing, preferably the corrugation step being a corrugation step with a helical course of the corrugation along the extension of the tubing, more preferably extrusion and corrugation taking place simultaneously;
- laying a layer (101) comprising a metal material on the corrugated tubing, said layer (101) being adapted to constitute a barrier against passage of humidity, wherein said metal layer (101) is flexible, has no function of structural support and comprises a single-layer film of metal or a multi-layer film comprising one or more metal films coupled or not to a layer of material adapted to maintain a deformed shape.

11. A process as claimed in the preceding claim, **characterised in that** it further comprises the step of over-extruding a coating layer (102), preferably of plastic material, for protection/fastening of the layer (101) comprising at least one film of metal material.

12. A process as claimed in claim 10 or 11, **characterised in that** the layer (101) comprising the metal material is inserted during extrusion into the plastic tube (100) to be corrugated and is caused to adhere to the inner wall by a fluid or a mechanical system placed inside the corrugator or immediately after the latter so that it follows the corrugated shape of the tube itself, the layer (101) comprising the metal material preferably having an adhesive layer (103) on the surface to be coupled to the tube.

13. A process as claimed in claim 10 or 11, **characterised in that** the layer (101) of metal material, at its inner surface in contact with the fluid, is coated with a plastic coating (102) previously obtained.

14. A process as claimed in the preceding claims from 10 to 13, **characterised in that** an electric current having suitable intensity and potential difference is fed to the metal film, so that said film is heated to temperatures not exceeding the melting temperatures of the plastic materials forming the tube, but sufficient to melt the ice formed on the tube within the requested periods of time.

15. A process as claimed in the preceding claims from 10 to 14, **characterised in that** the corrugation step involves the sub-step of levelling the recesses (13) so as to define inner surfaces at the inside of the tube, which have a flat course in order to prevent the noise produced by the gas flowing inside the tube.

## Patentansprüche

1. Kühlkreislauf (3) für Haushaltsgeräte, insbesondere Haushaltsgeräte zum Kühlen wie Kühlschränke, Gefriergeräte und dergleichen, umfassend:
- mindestens einen ersten Wärmetauscher (5), geeignet, um in Fluidkommunikation mit einem Kompressor (4) gebracht zu werden, um das Kühlen eines Kühlmediums im Wesentlichen in der Flüssigphase, das dadurch strömt, zu erlauben;
- mindestens einen zweiten Wärmetauscher (7) in Fluidkommunikation mit dem ersten Wärmetauscher (5) und aktiv in einem zu kühlenden Bereich (2), wobei der zweite Wärmetauscher (7) dem Kühlmedium zumindest teilweise in der gasförmigen Phase erlaubt, Wärme zu absorbieren und dadurch den Bereich (2) zu kühlen, wobei das Kühlmedium vom ersten Wärmetauscher (5) zum zweiten Wärmetauscher (5) zirkuliert und so zu einem Kompressor (4) für den nachfolgenden Zyklus geleitet werden kann, und
- eine Drosselvorrichtung (6), die zwischen dem ersten (5) und dem zweiten (7) Wärmetauscher angeordnet ist, um eine Ausdehnung des Kühlmediums zu erzeugen, wobei zumindest entweder der erste (5) oder der zweite (7) Wärmetauscher mindestens eine Schlauchleitung (9) umfasst, **dadurch gekennzeichnet, dass** mindestens ein Abschnitt dieser Schlauchleitung (9) ein gewelltes Profil aufweist, um Flexibilität zu verleihen, und dadurch, dass die Schlauchleitung (9) im Schnitt gesehen mindestens eine Schicht (100) eines Kunststoffmaterials und mindestens eine Schicht (101), umfassend Metallmaterial, aufweist, wobei die Metallschicht (101) mit der Kunststoffmaterialschicht verbunden ist, wobei das Metallmaterial ausgelegt ist, um eine Barriere für den Durchgang von Feuchtigkeit darzustellen, wobei die Schicht (100) aus Kunststoffmaterial eine Schicht ist, deren tragende Funktion es ist, die Form der Schlauchleitung (9) aufrechtzuerhalten, wobei die Schicht (100) aus einem Thermoplastmaterial besteht,
wobei die Metallschicht (101) flexibel ist und keine Funktion als tragende Stütze besitzt und eine einzelne Schicht Metallfolie oder eine mehrschichtige Folie umfasst, umfassend eine oder mehrere Metallfolien, die mit einer Schicht aus Material kaschiert oder nicht kaschiert ist, die ausgelegt ist, um eine verformte Form beizubehalten.

2. Kreislauf nach dem vorhergehenden Anspruch, **dadurch gekennzeichnet, dass** die Schlauchleitung (9) mindestens eine Beschichtungsschicht (102) umfasst, vorzugsweise aus Kunststoffmaterial und möglichst bestehend aus einer Wärmeschrumpffolie zum Schutz und/oder zum Befestigen der Metallschicht (101).

3. Kreislauf nach einem der vorhergehenden Ansprüche, **dadurch gekennzeichnet, dass** die Schlauchleitung (9) mindestens ein gewelltes Profil mit einem schraubenförmigen Verlauf der Wellung entlang der Längsausdehnung der Schlauchleitung aufweist.

4. Kreislauf nach einem der vorhergehenden Ansprüche, **dadurch gekennzeichnet, dass** das gewellte Profil der Schlauchleitung im Schnitt eine Abwechslung von Vorsprüngen (12) und Vertiefungen (13) umfasst, wobei die Vertiefungen (13) mindestens einen geraden Abschnitt (45) mit einem Verlauf aufweisen, der im Wesentlichen parallel zur L-Achse der Schlauchleitung (9) angeordnet ist.

5. Kreislauf nach einem der vorhergehenden Ansprüche, **dadurch gekennzeichnet, dass** die Schlauchleitung (9) zudem eine Bindungsschicht (103) aufweist, bei der es sich vorzugsweise um eine Schicht aus Haftmaterial handelt, die zwischen der Kunststoffschicht (100) und der Schicht aus Metallmaterial (101) eingesetzt ist, um die gegenseitige Bindung der zwei Schichten (100, 101) zu ermöglichen.

6. Kreislauf nach einem der vorhergehenden Ansprüche, **dadurch gekennzeichnet, dass** die Schicht (100) aus Kunststoffmaterial aus einem Polyamid wie Pa 6-6 besteht.

7. Kreislauf nach einem der vorhergehenden Ansprüche, **dadurch gekennzeichnet, dass** die Beschichtungsschicht (102) die Metallschicht (101) völlig bedeckt, mit der Funktion, die Metallschicht festzuhalten und chemisch zu schützen.

8. Kreislauf nach einem der vorhergehenden Ansprüche, **dadurch gekennzeichnet, dass** die Schicht aus Material, die geeignet ist, um eine verformte Form beizubehalten, aus Papiermaterial besteht.

9. Kreislauf nach einem der vorhergehenden Ansprüche, **dadurch gekennzeichnet, dass** die Metallschicht (101) aus 2 oder mehr metallbandähnlichen Elementen (101a und 101b) besteht, die einander im Längsschnitt der Schlauchleitung (9) an den jeweiligen Kanten überlappen, wobei die Metallschicht (101) oder die bandähnlichen Elemente (101a und 101b) vorzugsweise zuvor behandelt wurden, um eine Schicht aus einem haftbar gemachten Material entweder auf der oberen und der unteren Oberfläche oder beiden zu haben.

10. Verfahren zur Herstellung einer Schlauchleitung für Kühlkreisläufe für Haushaltsgeräte, **dadurch gekennzeichnet, dass** es folgende Schritte umfasst:
- Extrudieren eines Rohrs aus Kunststoffmaterial, wobei der Schritt des Extrudierens vorzugsweise einen Schritt der Koextrusion einer Schicht (100) aus Thermoplastmaterial und möglichst einer darüber gelagerten Schicht (103) aus Haftmaterial, das als Bindemittel wirkt, umfasst, wobei die Schicht (100) aus Kunststoffmaterial eine Schicht ist, deren tragende Funktion es ist, die Form der Schlauchleitung aufrechtzuerhalten;
- Wellen von mindestens einem Abschnitt der Schlauchleitung, wobei es sich beim Schritt des Wellens vorzugsweise um einen Schritt des Wellens mit einem schraubenförmigen Verlauf der Wellung entlang der Ausdehnung der Schlauchleitung handelt, und die Extrusion und das Wellen noch besser gleichzeitig stattfinden;
- Legen einer Schicht (101) der gewellten Schlauchleitung, umfassend ein Metallmaterial, auf die Schicht (101), ausgelegt, um eine Barriere gegen den Durchgang von Feuchtigkeit darzustellen, wobei die Metallschicht (101) flexibel ist, keine Funktion der tragenden Stütze aufweist und eine einzelne Folien- oder Metallschicht oder eine mehrschichtige Folie umfasst, umfassend eine oder mehrere Metallfolien, mit einer Schicht aus Material kaschiert oder nicht, ausgelegt ist, um eine verformte Form beizubehalten.

11. Verfahren nach dem vorhergehenden Anspruch, **dadurch gekennzeichnet, dass** es zudem den Schritt der Überextrusion einer Beschichtungsschicht (102), vorzugsweise aus Kunststoffmaterial, umfasst, um die Schicht (101), umfassend mindestens eine Folie aus Metallmaterial, zu schützen/zu befestigen.

12. Verfahren nach Anspruch 10 oder 11, **dadurch gekennzeichnet, dass** die Schicht (101), die das Metallmaterial umfasst, während der Extrusion in das zu wellende Kunststoffrohr (100) eingefügt wird und dessen Haftung an die Innenwand durch ein Fluid oder ein mechanisches System herbeigeführt wird, platziert in der Wellenmaschine oder unmittelbar nach dieser, sodass dieses der gewellten Form des Rohrs folgt, wobei die Schicht (101), die das Metallmaterial umfasst, vorzugsweise eine Haftschicht (103) auf der mit dem Rohr zu kaschierenden Oberfläche aufweist.

13. Verfahren nach Anspruch 10 oder 11, **dadurch gekennzeichnet, dass** die Schicht (101) aus Metallmaterial an ihrer inneren Oberfläche in Kontakt mit dem Fluid mit einer zuvor erhaltenen Kunststoffbeschichtung (102) beschichtet ist.

14. Verfahren nach Anspruch 10 bis 13, **dadurch gekennzeichnet, dass** ein elektrischer Strom, aufweisend eine geeignete Stärke und Potenzialdifferenz, zur Metallfolie geführt wird, sodass die Folie auf Temperaturen erhitzt wird, die die Schmelztemperaturen der Kunststoffmaterialien, die das Rohr bilden, nicht überschreiten, jedoch ausreichend sind, um das Eis, das sich auf dem Rohr bildet, innerhalb der geforderten Zeiträume zu schmelzen.

15. Verfahren nach Anspruch 10 bis 14, **dadurch gekennzeichnet, dass** der Schritt des Wellens einen Unterschritt des Ebenens der Vertiefungen (13) umfasst, sodass innere Oberflächen an der Innenseite des Rohrs definiert werden, die einen flachen Verlauf aufweisen, um den vom Gasstrom im Rohr erzeugten Lärm zu vermeiden.

## Revendications

1. Circuit de réfrigération (3) pour appareils électroménagers, en particulier des appareils électroménagers servant à réfrigérer tels que des réfrigérateurs, des congélateurs et similaire, comprenant :
- au moins un premier échangeur de chaleur (5), adapté pour être placé en communication fluidique avec un compresseur (4) pour permettre la réfrigération d'un liquide de refroidissement, substantiellement dans la phase liquide, le traversant ;
- au moins un second échangeur de chaleur (7) en communication fluidique avec ledit premier échangeur (5) et actif au niveau d'un espace (2) à refroidir, ledit second échangeur (7) permettant au liquide de refroidissement au moins partiellement dans la phase gazeuse d'absorber la chaleur refroidissant ainsi ledit espace (2), le liquide de refroidissement circulant du premier échangeur (5) vers le second échangeur (5) et pouvant donc être orienté vers un compresseur (4) pour un cycle suivant ; et
- un dispositif d'étranglement (6) disposé entre lesdits premier (5) et second (7) échangeurs de chaleur pour générer une expansion dudit liquide de refroidissement, au moins un desdits premier (5) et second (7) échangeurs de chaleur comprenant au moins un tube flexible (9), **caractérisé en ce qu'**au moins une partie dudit tube (9) présente un profil ondulé tel qu'il donne de la flexibilité à celui-ci, et **en ce que** ledit tube (9), vu en coupe, présente au moins une couche (100) de matière plastique et au moins une couche (101) comprenant un matériau en métal, la couche métallique (101) étant associée à la couche de matière plastique, ledit matériau en métal étant adapté pour constituer une barrière au passage de l'humidité, dans lequel ladite couche (100) de matière plastique est une couche dont la fonction structurelle est de maintenir la forme du tube (9), ladite couche (100) étant réalisée dans un matériau thermoplastique,
dans lequel ladite couche métallique (101) est flexible, n'a pas la fonction de support structurel et comporte une unique pellicule de métal ou une pellicule multicouche comportant une ou plusieurs pellicules métalliques accouplées ou non à une couche de matériau adaptée pour maintenir une forme déformée.

2. Circuit selon la revendication précédente, **caractérisé en ce que** ledit tube (9) comprend au moins une couche de revêtement (102), de préférence en matière plastique et si possible consistant en une pellicule thermorétractable pour la protection et/ou la fixation de la couche métallique (101).

3. Circuit selon l'une quelconque des revendications précédentes, **caractérisé en ce que** le tube (9) possède au moins un profil ondulé à course torsadée de l'ondulation le long de l'extension longitudinale du tube.

4. Circuit selon l'une quelconque des revendications précédentes, **caractérisé en ce que** le profil ondulé du tube, en coupe, comprend une alternance de saillies (12) et de renfoncements (13), lesdits renfoncements (13) ayant au moins une partie rectiligne (45) avec une course de préférence substantiellement parallèle à l'axe L du tube (9).

5. Circuit selon l'une quelconque des revendications précédentes, **caractérisé en ce que** ledit tube (9) comprend de plus une couche de contrainte (103), de préférence une couche de matière adhésive, interposée entre la couche de plastique (100) et la couche de matériau en métal (101) pour permettre la contrainte mutuelle des deux couches (100, 101).

6. Circuit selon l'une quelconque des revendications précédentes, **caractérisé en ce que** la couche (100) de matière plastique est en polyamide tel que du polyamide 6-6.

7. Circuit selon l'une quelconque des revendications précédentes, **caractérisé en ce que** la couche de revêtement (102) recouvre totalement la couche de métal (101) avec pour fonction d'accrocher et de protéger chimiquement la couche de métal.

8. Circuit selon l'une quelconque des revendications précédentes, **caractérisé en ce que** ladite couche de matériau adaptée à maintenir une forme déformée est en papier.

9. Circuit selon l'une quelconque des revendications précédentes, **caractérisé en ce que** la couche de métal 101 est constituée de 2 ou plusieurs éléments en forme de ruban métallique 101a et 101b se chevauchant les uns les autre dans la section longitudinale du tube (9) au niveau de bords respectifs, de préférence la couche métallique (101), ou les éléments en forme de ruban (101a et 101b) étant préalablement traités de manière à avoir une couche d'un matériau rendu adhésif sur une ou deux de ses surfaces supérieure et inférieure.

10. Procédé pour la production d'un tube pour circuits de réfrigération pour appareils électroménagers, **caractérisé en ce qu'**il comprend les étapes suivantes :
- extruder un tube en matière plastique, l'étape d'extrusion comprenant de préférence une étape de coextrusion d'une couche (100) de matériau thermoplastique et si possible d'une couche superposée (103) de matière adhésive agissant comme un liant, dans lequel ladite couche (100) en matière plastique est une couche dont la fonction structurelle est de maintenir la forme du tube ;
- former des ondulations sur au moins une partie dudit tube, l'étape de formage d'ondulations étant de préférence une étape de formage d'ondulations à course torsadée de l'ondulation le long de l'extension du tube ; idéalement, l'extrusion et l'ondulation se déroulant simultanément ;
- revêtir une couche (101), comprenant un matériau métallique sur le tube ondulé, ladite couche (101) étant adaptée pour constituer une barrière contre le passage de l'humidité, dans lequel ladite couche métallique (101) est flexible, n'a pas la fonction de support structurel et comporte une unique pellicule de métal ou une pellicule multicouche comportant une ou plusieurs pellicules métalliques accouplées ou non à une couche de matériau adaptée pour maintenir une forme déformée.

11. Procédé selon la revendication précédente, **caractérisé en ce qu'**il comprend de plus l'étape consistant à surextruder une couche de revêtement (102), de préférence en matière plastique, pour la protection/fixation de la couche (101) comprenant au moins une pellicule de matériau métallique.

12. Procédé selon les revendications 10 ou 11, **caractérisé en ce que** la couche (101) comprenant le matériau métallique est insérée lors de l'extrusion dans le tube en matière plastique (100) à onduler et est faite adhérer à la paroi interne par un fluide ou un système mécanique placé à l'intérieur de l'onduleuse ou immédiatement après cette dernière de manière à ce qu'il suive la forme ondulée du tube lui-même, la couche (101) comprenant le matériau métallique ayant, de préférence, une couche adhésive (103) sur la surface à accoupler au tube.

13. Procédé selon les revendications 10 ou 11, **caractérisé en ce que** la couche (101) de matériau métallique, au niveau de sa surface interne en contact avec le liquide, est revêtue d'un revêtement en plastique (102) obtenu précédemment.

14. Procédé selon les revendications précédentes de 10 à 13, **caractérisé en ce qu'**un courant électrique ayant une intensité et une différence de potentiel adaptées est alimenté à la pellicule métallique de sorte que ladite pellicule est chauffée à des températures n'excédant pas les températures de fusion des matières plastiques formant le tube, mais suffisantes pour fondre la glace formée sur le tube dans une fourchette de durées requises.

15. Procédé selon les revendications précédentes de 10 à 14, **caractérisé en ce que** l'étape de formage d'ondulation implique la sous-étape de planage des renfoncements (13) de manière à définir des surfaces internes à l'intérieur du tube qui a une course plate afin d'éviter tout bruit produit par le gaz s'écoulant à l'intérieur du tube.
